# EUROPÄISCHE PATENTSCHRIFT

(11) **EP 3 801 961 B1**
(45) Veröffentlichungstag und Bekanntmachung des Hinweises auf die Patenterteilung: **07.09.2022**
(21) Anmeldenummer: 19728995.2
(22) Anmeldetag: 06.06.2019
(51) Int. Cl.: B23B 31/107, B23D 57/00, B27B 5/32, B63C 11/52

(54) **UNTERWASSER-BEARBEITUNGSMASCHINE MIT EINEM WERKZEUGHALTER MIT EINER WECHSELNABE FÜR DIE AUFNAHME VON ROTATIONSWERKZEUGEN**
UNDERWATER MACHINE TOOL COMPRISING A TOOL HOLDER WITH A REMOVABLE HUB FOR RECEIVING ROTATING TOOLS
MACHINE DE TRAITEMENT SOUS L'EAU DOTÉE D'UN PORTE-OUTIL DOTÉ D'UN MOYEU DE CHANGEMENT DESTINÉ AU LOGEMENT D'OUTILS ROTATIFS

(30) Priorität: 08.06.2018 DE 102018113747
(43) Veröffentlichungstag der Anmeldung: 14.04.2021
(73) Patentinhaber: Schöning GmbH, 44145 Dortmund (DE)
(72) Erfinder: MAUL, Hans-Erich, 52068 Aachen (DE); BEGIEBING, Tim, Aachen 52080 (DE)
(74) Vertreter: Bockhorni & Brüntjen Partnerschaft Patentanwälte mbB
(86) Internationale Anmeldenummer: PCT/EP2019/064898
(87) Internationale Veröffentlichungsnummer: WO 2019/234203

(56) Entgegenhaltungen:
- GB-A- 2 203 989
- GB-A- 2 503 579
- US-A- 3 999 769
- US-A- 4 710 077

## Beschreibung

Die Erfindung betrifft eine Unterwasser-Bearbeitungsmaschine gemäß dem Oberbegriff des Anspruchs 1. Die GB 2 203 989 A offenbart eine solche Unterwasser-Bearbeitungsmaschine.

Derartige Unterwasser-Bearbeitungsmaschine, die mit einem Werkzeughalter mit einem Trägerkörper für eine Werkzeugnabe für die Aufnahme eines entsprechenden Rotationswerkzeuges, wie Fräser, Säge, Bohrer und dergleichen, versehen ist, wird maßgeblich im Offshore-Bereich für Arbeiten unter Wasser, etwa an Bohrinseln, verwendet. Dabei handelt es sich um einen kritischen Bearbeitungsbereich unter Wasser, wobei die Bearbeitungsmaschine nur mit Aufwand zugänglich ist. In dem Falle, wenn sich das Bearbeitungswerkzeug, eine Säge oder ein Fräser an dem zu bearbeitenden Teil unter Wasser festsetzt und nicht mehr gelöst werden kann, ist es außerordentlich schwierig, hier Abhilfe zu schaffen, da die Bearbeitungsmaschine dann nicht nach oben gezogen werden kann. Auch im Fall einer Beschädigung des Bearbeitungswerkzeuges, etwa einer Säge, bedarf es einer entsprechenden Reparatur und damit eines Lösens des werkzeugaufnehmenden Trägers, das heißt Nabe, und zwar unter Bedingungen, die nicht durch menschliche Entsperrung des Bauteils möglich sind. Da zudem die Bearbeitungsmaschinen unter Wasser, und zwar zumeist in einem Bereich von 20 bis 50 m unter Meeresspiegel, eingesetzt werden und damit nur schwer und umständlich zugänglich sind, ist das Lösen einer entsprechenden Werkzeugnabe entsprechend schwierig, was natürlich auch für die Montage zutrifft. Eine unmittelbare manuelle Entsperrung des Bauteils ist nämlich nicht möglich. Zudem ist es für diesen Unterwasserbetrieb erforderlich, hohe Verschlusskräfte zu erzeugen.

Entsprechend besteht die Aufgabe der Erfindung darin, eine Unterwasser-Bearbeitungsmaschine mit einem Werkzeughalter zu schaffen, der eine schnelle und einfache Werkzeugwechselung und Montage ermöglicht und hierbei auch hohe Verschlusskräfte nach erfolgter Montage ermöglicht und dies bei möglichst einfachem Aufbau des Werkzeughalters.

Diese Aufgabe wird erfindungsgemäß durch die im unabhängigen Anspruch 1 enthaltenden Merkmale gelöst, wobei zweckmäßige Weiterbildungen durch die in den Unteransprüchen enthaltenen Merkmale gekennzeichnet sind.

Nach Maßgabe der Erfindung weist der Werkzeughalter mindestens einen Entriegelungskolben im Werkzeughalter auf, der Teil einer Kolben-/Zylindereinheit ist und bezüglich des Werkzeughalters bei entsprechender Druckbeaufschlagung der Zylinderkammer, die sich vorzugsweise auf der Werkzeughalterinnenseite des Kolbens befindet, in Richtung der Werkzeugnabe ausgerückt werden kann. Im Nabenring der Wechselnabe ist ein mit dem Entriegelungskolben bzw. -bolzen in Verriegelungsstellung ausgerichteter Sperrbolzen aufgenommen. Dieser ist auf seiner vom Kolben weg gerichteten Seite an seinem stirnseitigen Ende vorzugsweise durch ein Federelement vorspannbar. Ferner weist dieser Sperrbolzen auf seinem dem Werkzeughalter zugewandten Ende, vorzugsweise seinem stirnseitigen Ende, einen Verriegelungsbolzen auf, der in Verriegelungsstellung mit dem Trägerkörper verriegelt wird, insbesondere in eine dort vorhandene entsprechende Verriegelungsausbildung eingreift. Dieser Verriegelungsbolzen wirkt mit einer derart ausgebildeten Nocke am stirnseitigen Ende des Nabenrings zusammen, dass bei Ausrücken des Entriegelungskolbens, der insbesondere als Bolzen ausgebildet ist, der Sperrbolzen der Wechselnabe in den Nabenring unter Aufbau einer Vorspannung des nabenseitigen Federelementes gedrückt wird, wobei der Verriegelungsbolzen durch die Nabe aus der Verriegelungsausbildung im Sperrbolzen ausgerückt wird, so dass damit die Wechselnabe ohne Weiteres vom Werkzeughalter lösbar ist. Vorzugsweise ist der Trägerkörper ein Kupplungsaufnahmekörper, mit dem die Wechselnabe gekoppelt werden kann.

Durch diesen Mechanismus ist nicht nur eine sehr schnelle und einfache Lösbarkeit der Wechselnabe und auch der Montage ermöglicht, vielmehr ergibt sich auch eine sehr hohe Verschlusskraft mit einer sehr wirksamen Verriegelung zwischen Wechselnabe und Werkzeughalter der Bearbeitungsmaschine. Dies ist insbesondere wichtig im Falle eines Festfressens des Bearbeitungswerkzeuges, welches von dem zu bearbeitenden Gegenstand unter Wasser nicht mehr gelöst werden kann. Nach Maßgabe der Erfindung kann in einfacher Weise die Wechselnabe von der Bearbeitungsmaschine gelöst, diese hochgezogen und über Wasser bedarfsweise mit einer neuen Wechselnabe mit entsprechendem Bearbeitungswerkzeug versehen werden. Natürlich ist auch das Lösen der Wechselnabe mittels Taucher unter Wasser möglich, gegebenenfalls auch eine Montage unter Wasser, in dem eine entsprechende Wechselnabe nach unten gebracht und dort mit der Bearbeitungsmaschine montiert wird. Beide Möglichkeiten stehen zu Gebote.

Zweckmäßigerweise sitzt auf dem Nabenring ein Verschiebering, der einen Arretierungsbolzen trägt, der durch eine, vorzugsweise durch ein Langloch gebildete Führungsöffnung im Nabenring greift und verschiebefest mit dem Sperrbolzen verbunden ist. Dies ist vorteilhaft für die Montage der Wechselnabe. Wird der Verschiebering in Richtung des Nabenflansches des Sperrbolzens bewegt bzw. gedrückt, was manuell erfolgen kann, dann wird das dem Sperrbolzen zugeordnete Federelement vorgespannt und baut eine Rückstellkraft auf, die - so freigelassen - den Sperrbolzen aus dem Inneren des Nabenrings nach außen drückt und zwar in Richtung des Werkzeughalters. In dieser Stellung, in welcher der Verschiebering zum Nabenflansch bewegt ist, kann eine Festlegung durch Klammern erfolgen, so dass der Verschiebering und damit auch der ausgerückte Verriegelungsbolzen in dieser Position festgelegt sind. Damit kann die Wechselnabe in einfacher Weise auf das Bearbeitungswerkzeug aufgesteckt werden. Bei entkoppeltem Zustand der Wechselnabe, insbesondere wenn der Verschiebering in Richtung zum Nabenflansch festgelegt ist, ragt der Verrieglungsbolzen bzw. Spannsatz aus dem Trägerkörper heraus und zeigt so, seine entsicherte Präsenz. Setzt man den Verschiebering frei, dann wird durch die Vorspannung des Federelements der Sperrbolzen in Richtung auf den Werkzeughalter gedrückt mit der Folge, dass der Verriegelungsbolzen in die Riegelausnehmung des Trägerkörpers einrückt und damit sehr schnell die sichere Verriegelungsposition zwischen Wechselnabe und Werkzeughalter in baulich einfacher Weise ermöglicht wird. Mit seinem unteren Ende liegt der Verriegelungsbolzen bzw. Spannsatz dabei vorzugsweise flächenbündig in der Riegelausnehmung des Trägerkörpers.

Zweckmäßigerweise weist auch der Entriegelungskolben auf seiner kammerfernen Seite ein Federelement auf. Wird der Kolben ausgerückt, was durch Druckbeaufschlagung in hydraulischer oder pneumatischer Weise des Kolbens erfolgen kann, der vorzugsweise als Bolzen ausgebildet ist, dann wird das Federelement vorgespannt und baut eine Rückstellkraft auf, die in Richtung einer Bewegung des Entriegelungskolbens nach links, also in das Innere des Werkzeughalters wirkt. Dies hat zur Folge, dass dann, wenn die Wechselnabe entfernt wird und die Zylinderkammer des Kolbens druckentlastet wird, automatisch der Kolben wieder in seine Ruhestellung in das Innere des Werkzeughalters gedrückt wird.

Zweckmäßigerweise ist der Sperrbolzen in einer Bohrung des Nabenrings aufgenommen, und zwar translatorisch, also hin und her verschiebbar.

Auch der Verriegelungsbolzen ist translatorisch aufgenommen, und zwar dergestalt, dass er von radial nach innen radial nach außen bewegt werden kann. Hierzu ist der Verriegelungsbolzen zweckmäßigerweise in einer Bohrung des Nabenrings aufgenommen und damit zwangsgeführt. Zweckmäßigerweise weist der Verriegelungsbolzen an seinem unteren Ende, also an dem radial inneren Ende, eine Riegelnase auf, die in einfacher Weise durch eine Schrägfläche ausgebildet sein kann.

Zweckmäßigerweise ist auch die Riegelausbildung im Trägerkörper durch eine mit der Riegelausbildung im Verriegelungsbolzen komplementären Ausnehmung, insbesondere in Form einer gleichgerichteten Schrägfläche versehen, die den Boden der Riegelausnehmung im Trägerkörper bildet.

In besonders zweckmäßiger Weise ist es vorgesehen, dass über den Umfang der Bearbeitungsmaschine, also insbesondere über den Umfang des Trägerkörpers und der Wechselnabe, mehrere Verriegelungsvorrichtungen vorgesehen sind, vorzugsweise mit gleichmäßigem Winkelabstand zueinander. Geeignet haben sich insbesondere drei über den Umfang verteilt angeordnete Verriegelungsvorrichtungen, insbesondere aber auch zwei, sechs oder acht Verriegelungsvorrichtungen, wobei je nach Bauart auch eine andere Anzahl von Verriegelungsvorrichtungen anwendbar ist. Zweckmäßigerweise ist dies abhängig von der jeweils erforderlichen axialen Haltekraft.

Zweckmäßigerweise ist die Nocke durch eine im Querschnitt schräg verlaufende Stegausbildung gebildet, auf der der Verriegelungsbolzen in Art eines Reiters sitzt und je nach Bewegungsrichtung bzw. translatorischen Bewegung der Nocke auf- und abbewegt wird, also in Entriegelungsstellung nach oben oder in die Verriegelungsstellung radial nach unten bewegt wird. Aufgrund der schrägverlaufenden Anordnung der Nocke im Verriegelungsbolzen wird ein hoher Formschluss bzw. Flächenverbund erzeugt, wenn der Verriegelungsbolzen in Verriegelungsposition zum Trägerkörper gesichert ist und zwar mit hohen Halte- und Verschlusskräften.

Nachfolgend wird ein bevorzugtes Ausführungsbeispiel der Erfindung anhand der Zeichnung beschrieben. Darin zeigen in rein schematischer Darstellung
Fig. 1 eine Teilansicht einer Unterwasser-Bearbeitungsmaschine mit einem Werkzeughalter und einer daran angeordneten Wechselnabe in Verriegelungsstellung
Fig. 2 eine Darstellung gemäß Fig. 1 mit entriegelter und abgenommener Wechselnabe.

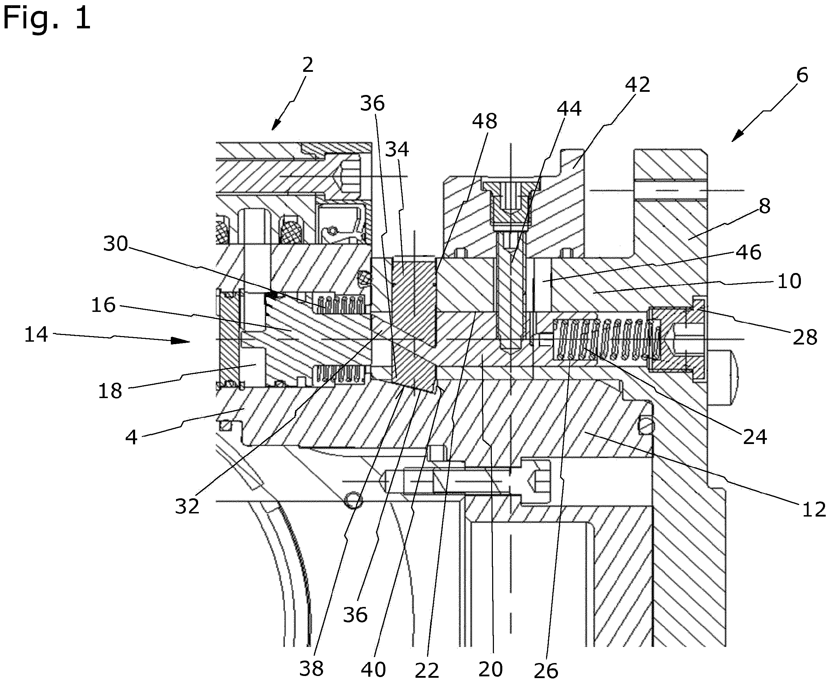

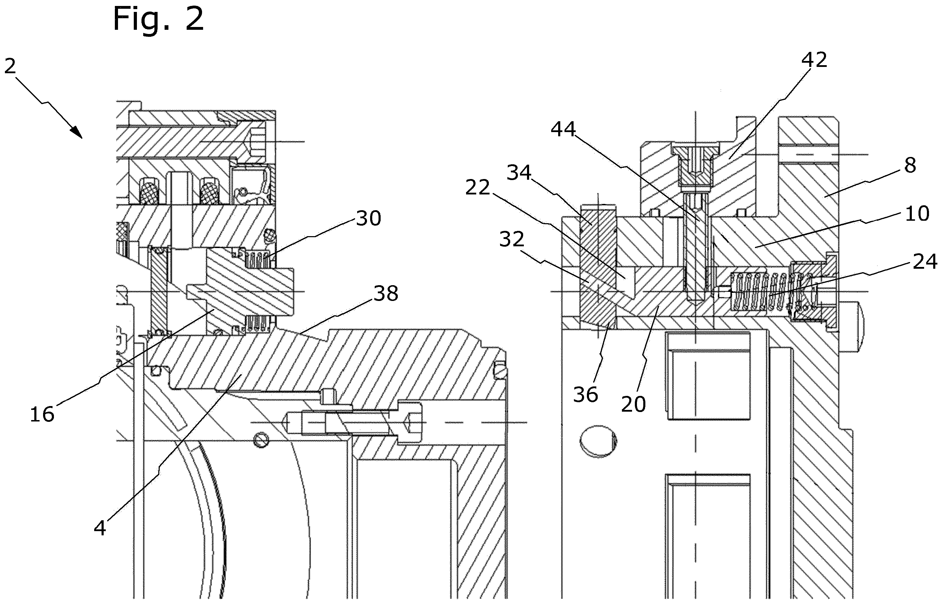

Fig. 1 zeigt eine Unterwasser-Bearbeitungsmaschine für die Bearbeitung im Offshore-Bereich mittels Fräsern, Bohrern, Sägen oder dergleichen mit einem Werkzeughalter 2 und einem darin in einer zentralen Bohrung aufgenommenen Trägerkörper 4, dessen Achse koaxial mit der zentralen Rotationsachse der Bearbeitungsmaschine zusammenfällt. Auf dem zylindrisch ausgebildeten Trägerkörper 4 ist eine mit 6 bezeichnete Wechselnabe in Verriegelungsstellung gemäß der Fig. 1 aufgenommen, die mit einem Nabenflansch 8 und einem zentrischen rotationszylindrischen Nabenring 10 ausgebildet ist. Wie Fig. 1 zeigt, ist der Nabenring 10 auf einem vom Werkzeughalter 2 vorstehenden zylindrischen Hülsenabschnitt 12 des Trägerkörpers 4 aufgenommen. Zur Verriegelung der Wechselnabe 6 mit dem Werkzeughalter 2 ist mindestens eine im Folgenden beschriebene Verriegelungsvorrichtung vorgesehen, wobei zweckmäßigerweise mehrere mit gleichem Winkelabstand über den Umfang des Werkzeughalters bzw. des Trägerkörpers und der Wechselnabe 6 angeordnete Verriegelungseinrichtungen vorgesehen sein können, insbesondere drei, vier, sechs oder acht Verriegelungseinrichtungen, je nach Größe, Leistungsauslegung und Bautypus der Bearbeitungsmaschine. Insofern wird im Folgenden lediglich eine Verriegelungsvorrichtung näher beschrieben, die auch in den Fig. 1 und 2 entsprechend dargestellt ist.

Die Verriegelungsvorrichtung weist eine allgemein mit 14 bezeichnete Kolbenzylindereinrichtung auf, deren Kolben mit 16 bezeichnet ist. Am nabenfernen Ende des Kolbens 16 ist eine Zylinderkammer 18 ausgebildet, die von extern mit Druck hydraulisch oder pneumatisch beaufschlagt werden kann.

Ausgerichtet mit der Kolbenachse ist auf Seiten der Wechselnabe 6 ein Sperrbolzen 20 vorgesehen, der in einer Bohrung 22 des Nabenringes 10 translatorisch verschiebbar aufgenommen ist. Sowohl die Kolbenachse wie auch die in der in Verriegelungsstellung nach Fig. 1 mit der Kolbenachse ausgerichtete Achse des Sperrbolzens 20 sind parallel mit der Rotations- bzw. axialen Achse der Bearbeitungsmaschine bzw. des Trägerkörpers 4. Der Kolben 16 und der ebenso translatorisch verschiebbare Sperrbolzen 20 sind jeweils durch ein Federelement vorspannbar, wobei ein Federelement 24 in einer Ausnehmung 26 des Sperrbolzens 20 aufgenommen ist und an einen in den Nabenflansch 8 eingeschraubten Schraubbolzen angelegt ist, der mit dem Bezugszeichen 28 bezeichnet ist. Dies hat zur Folge, dass dann, wenn der Sperrbolzen 20 gemäß Fig. 1 nach rechts bewegt wird, das Federelement 24 entsprechend vorgespannt wird und eine Rückstellkraft aufbaut, die in Richtung des Sperrbolzens 20 nach links zum Werkzeughalter 2 gerichtet ist.

Am Kolben 16 ist ein Federelement 30 angeordnet, und zwar am Ende des Kolbens 16, der zur Nabe 6 hin gerichtet ist. Auch hier gilt, dass dann, wenn der Kolben 16 nach rechts ausgerückt wird, die Feder 30 unter Vorspannung gerät und damit eine Rückstellkraft auf den Kolben 16 aufbaut, die in Richtung des Kolbens nach links wirkt.

Der Sperrbolzen 20 weist im dargestellten Ausführungsbeispiel an seinem dem Werkzeughalter 2 zugerichteten Ende eine Nocke 32 auf, die vom stirnseitigen Ende des Sperrbolzens 20 in Richtung des Werkzeughalters 2, also von der Nabe weg gerichtet, vorspringt. Die im Schnitt dargestellte Nocke 32 bildet insoweit einen schräg verlaufenden Steg 32 bzw. einen schräg verlaufenden Flansch, der vom stirnseitigen Ende des Bolzens 20 in Richtung des Werkzeughalters 2 radial von innen nach oben verläuft. Auf dieser Nocke 32 sitzt, sozusagen als Reiter, eine mit einer mit dem Flansch 32 komplementären Ausnehmung versehener Verriegelungsbolzen 34, der längs der Nocke 32 verschiebbar ist. Der Verriegelungsbolzen 34 durchgreift den Nabenring 10 und greift mit seinem unteren Ende gemäß Fig. 1 in eine hier als Riegelausnehmung ausgebildete Riegelausbildung 38 im Trägerkörper 4, genauer gesagt im zylinderförmigen Hülsenabschnitt 12 ein, wodurch sich die Verriegelungsposition für die Wechselnabe 6 ergibt. Im dargestellten Ausführungsbeispiel weist der Verriegelungsbolzen 34 an seinem unteren Ende, also dem zum Trägerkörper hin gerichteten Ende, eine mit 36 bezeichnete Riegelnase auf, die hier durch eine Schrägfläche gebildet ist, deren Schräge sich im dargestellten Ausführungsbeispiel nach Fig. 1 von links nach rechts und damit radial nach unten erstreckt. Die Riegelnase 36 greift in eine komplementär ausgebildete Riegelausbildung in Form einer Riegelausnehmung 38 ein, die eine Sperrschulter 40 aufweist.

Auf dem Nabenring 10 sitzt ein Verschiebering 42, der axial auf der Außenumfangsfläche des Nabenrings 10 geführt ist und über einen Arretierungsbolzen 44, der den Nabenring 10 durchgreift, fest mit dem Sperrbolzen 20 verbunden ist und hierbei gemäß dargestelltem Ausführungsbeispiel in eine Schraubbohrung des Sperrbolzens 20 eingreift und über einen Schraubverbund mit dem Bolzen 20 fest verbunden ist. Der Arretierungsbolzen 44 durchgreift hierbei in eine in Längsrichtung sich erstreckende, insbesondere als Langloch ausgebildete Führungsöffnung 46 im Nabenring 10 ein bzw. durchgreift diese Öffnung 46, dergestalt, dass dann, wenn der Verschiebering 42 nach rechts bewegt wird, ebenso der Sperrbolzen 20 nach rechts und mit Aufbau einer Vorspannung auf das Federelement 24 bewegt wird, und zwar in Richtung Nabenflansch 8. Wird der Sperrbolzen 20 nach rechts bewegt, dann läuft der Verriegelungsbolzen 34 auf der gleichzeitig mit dem Kolben nach rechts bewegten Nabe nach oben, und zwar radial nach oben infolge der Zwangsführung des Verriegelungsbolzens 34 in einer Bohrung 48 des Nabenrings 10, was eine Entriegelung der Nabe bewirkt. Um die mit dem Trägerkörper 4 verriegelte Wechselnabe 6 im Fall einer Beschädigung eines Rotationswerkzeugs, etwa einer Säge, vom Werkzeughalter 2 unter Wasser auszuspannen, wird die Zylinderkammer 18 des Werkzeughalters 2 mit Druck, entweder hydraulisch oder pneumatisch, beaufschlagt, so dass der Kolben 16 nach rechts aus dem Werkzeughalter 2 bewegt wird und hierbei aufgrund des Kontakts mit der Nocke 32 den Sperrbolzen 20 nach rechts gegen das vorzugsweise als Druckfeder ausgelegte Federelement 24 bewegt, welches vorgespannt wird. Dadurch fährt der Verriegelungsbolzen 34, der als Reiter auf dem Steg 32 sitzt, zwangsläufig nach oben und gelangt aus der Verriegelungsstellung heraus in die Entriegelungsstellung, in welcher der Verriegelungsbolzen 34 aus der in Fig. 1 dargestellten Verriegelungsstellung mit Eingriff Riegelnase 36 in die Riegelausnehmung 38 nach oben ausgerückt ist. In dieser Stellung, also Entriegelungsstellung, kann die Wechselnabe 6 nach rechts hin abgezogen werden, um die Bearbeitungsmaschine nach oben zu ziehen und einen Wechsel des Bearbeitungswerkzeugs vorzunehmen.

Zum Zwecke der Montage wird gemäß Darstellung in Fig. 2 der Verschiebering 42 nach rechts in Richtung auf den Nabenflansch 8 manuell oder motorisch gedrückt, wobei durch den Arretierungsbolzen 44 auch der Sperrbolzen 20 nach rechts mitbewegt wird, und zwar unter Federvorspannung des Federelements 24, das hier zweckmäßigerweise als Druckfeder ausgebildet ist. Mit der Bewegung des Sperrbolzens 22 nach rechts in Richtung des Nabenflansches 8 aufgrund der entsprechenden Verschiebung des Verschieberings 42 wird der Verriegelungsbolzen 34 aufgrund seiner Zwangsführung auf der Nocke 32 nach oben geführt und befindet sich damit in Entriegelungsstellung, so dass in dieser Stellung die Wechselnabe 6 in einfacher Weise auf den Trägerkörper 4, der in Fig. 2 links dargestellt ist, aufgezogen bzw. aufgeschoben werden kann. Der für die Montagestellung rechts in Richtung auf den Nabenflansch 8 gedrückte Verschiebering 42 kann in der ausgerückten Position des Verriegelungsbolzens 34 mit der Wechselnabe 6, insbesondere dem Nabenflansch 8, verklammert und damit zweckmäßigerweise arretiert werden, was in geeigneter Weise erfolgen kann, insbesondere beispielsweise durch entsprechende Stahlklammern bzw. einem federnden Druckstück. Werden diese gelöst, dann wird der Sperrbolzen 22 infolge der Vorspannung des Federelements 24 nach links gedrückt, wobei der gemäß der Fig. 2 ausgerückte Entriegelungsbolzen 16 nach links, das heißt in das Innere des Werkzeughalters 2, gedrückt wird unter Entlastung des Federelements 30, so dass dann der Verriegelungsbolzen 34 in die Riegelausnehmung 38 des Trägerkörpers 4 eingreift und damit die Riegelnase 36 des Verriegelungsbolzens 34 gegen die Sperrschulter 40 anliegt und damit die Wechselnabe 6 fest mit dem Werkzeughalter 2 verbunden bzw. gekoppelt ist. Aufgrund des dargestellten Mechanismus werden hierbei hohe Verschlusskräfte bei gleichzeitig geringer Vorspannung erzeugt. Mit dem Verriegelungsmechanismus wird eine hohe Verschlusssicherheit erzeugt. Der formschlüssige Flächenverbund des Sperrbolzens bzw. der Verriegelungsvorrichtung kann durch geeignete Wahl der Größe und Steigungsfaktoren je nach Anwendungsfall ausgelegt werden. Dieses beschriebene System eignet sich insbesondere zum Lösen eines Werkzeugträgers, hier einer Wechselnabe, unter Wasser.

## Patentansprüche

1. Unterwasser-Bearbeitungsmaschine mit einem Werkzeughalter (2) mit einer Wechselnabe (6) für die Aufnahme mindestens eines Rotationswerkzeuges, wie etwa Fräser, Säge, Bohrer und dergleichen, wobei der Werkzeughalter (2) einen vorzugsweise zylindrisch ausgebildeten Trägerkörper (4) für die Aufnahme der Wechselnabe (6) aufweist, die aus einem Nabenflansch (8) für die Werkzeugaufnahme und einem zentrisch vom Nabenflansch vorstehenden Nabenring (10) gebildet ist, wobei der vorzugsweise zentrisch ausgebildete Nabenring (10) auf dem Trägerkörper (4) anordbar und durch mindestens eine Verriegelungsvorrichtung lösbar und arretierbar anordbar ist, **dadurch gekennzeichnet, dass**
die mindestens eine Verriegelungsvorrichtung im Werkzeughalter (2) einen in einer druckbeaufschlagbaren Kammer (18) aufgenommenen Entriegelungsbolzen (16) aufweist und im Nabenring (10) ein mit dem Entriegelungsbolzen (16) ausgerichteter Sperrbolzen (20) aufgenommen ist, der vorzugsweise an seinem werkzeughalterfernen Ende durch ein Federelement (24) vorspannbar ist und auf seinem dem Werkzeughalter (2) zugewandten stirnseitigen Ende einen Verriegelungsbolzen (34) aufweist, der in Verriegelungsstellung in eine Verriegelungsausbildung (38) am Trägerkörper (4) eingreift und mit einer derart ausgebildeten Nocke (32) am stirnseitigen Ende des Sperrbolzens (20) zusammenwirkt, dass bei druckbeaufschlagtbedingtem Ausfahren des Entriegelungskolbens (16) in Nabenrichtung der Kolben (16) den Sperrbolzen (20) in den Nabenring (10) drückt und der Verriegelungsbolzen (34) durch die Nocke (32) aus der Verriegelungsausbildung (38) ausgerückt wird, so dass die Wechselnabe (6) vom Werkzeughalter (2) lösbar ist.

2. Bearbeitungsmaschine nach Anspruch 1, **dadurch gekennzeichnet, dass** auf dem Nabenring (10) ein Verschiebering (42) sitzt, der einen Arretierungsbolzen (44) trägt, der eine vorzugsweise durch ein Langloch gebildete Führungsöffnung (46) im Nabenring (10) durchgreift und verschiebefest mit dem Sperrbolzen (20) verbunden ist, derart, dass durch Verschieben des Verschieberings (42) in Richtung des Nabenflansches (8) der Sperrbolzen (20) in den Nabenring (10) unter Vorspannung des Federelements (24) gedrückt wird, so dass der auf dem Nocken (32) sitzende Verriegelungsbolzen (34) in seine Entriegelungsposition bewegt ist.

3. Bearbeitungsmaschine nach Anspruch 1 oder 2, **dadurch gekennzeichnet, dass** der Entriegelungskolben (16) auf seiner kammerfernen Seite ein Federelement (30) aufweist, welches durch den infolge Druckbeaufschlagung ausfahrbaren Entriegelungskolben (16) vorspannbar ist.

4. Bearbeitungsmaschine nach einem der vorhergehenden Ansprüche, **dadurch gekennzeichnet, dass** der Sperrbolzen (20) in einer parallel zur Nabenachse ausgebildeten Bohrung (22) des Nabenrings (10) translatorisch aufgenommen ist.

5. Bearbeitungsmaschine nach einem der vorhergehenden Ansprüche, **dadurch gekennzeichnet, dass** der Verriegelungsbolzen (34) in einer vorzugsweise radialen Bohrung (48) des Nabenrings (10) aufgenommen ist und auf seinem zum Sperrbolzen (20) gerichteten Ende eine Riegelnase (36) aufweist, die vorzugsweise durch eine zum Nabenflansch hin und von oben radial nach unten weisenden Schrägfläche gebildet ist.

6. Bearbeitungsmaschine nach einem der vorhergehenden Ansprüche, **dadurch gekennzeichnet, dass** die Riegelausbildung im Sperrbolzen (20) durch eine mit der Riegelnase komplementäre Ausnehmung (38) gebildet ist, insbesondere mit gleichgerichteter Schrägfläche am Boden der Ausnehmung (38) ausgebildet ist.

7. Bearbeitungsmaschine nach einem der vorhergehenden Ansprüche, **dadurch gekennzeichnet, dass** über den Umfang von Trägerkörper (4) und Wechselnabe (6) mehrere mit gleichmäßigem Winkelabstand zueinander angeordnete Verriegelungseinrichtungen vorgesehen sind.

8. Bearbeitungsmaschine nach einem der vorhergehenden Ansprüche, **dadurch gekennzeichnet, dass** der Trägerkörper (4) und der Nabenring (10) zylindrisch um die Axialachse der Bearbeitungsmaschine ausgebildet sind.

9. Bearbeitungsmaschine nach einem der vorhergehenden Ansprüche, **dadurch gekennzeichnet, dass** die Nocke (32) durch einen im Querschnitt schräg verlaufenden, vorzugsweise stegartigen Flansch gebildet ist, der sich vom Inneren des Nabenrings (10) zum Äußeren des Nabenrings (10) von radial innen nach radial außen erstreckt.

10. Bearbeitungsmaschine nach Anspruch 9, **dadurch gekennzeichnet, dass** der Verriegelungsbolzen (34) mit einer Ausnehmung versehen ist, mit der dieser auf dem Flansch (32) verschiebbar, vorzugsweise in Art eines Reiters, sitzt.

11. Bearbeitungsmaschine nach einem der vorhergehenden Ansprüche, **dadurch gekennzeichnet, dass** der Verschiebering (42) koaxial mit der Achse der Nabe (6) ausgebildet ist.

## Claims

1. Underwater machine tool comprising a tool holder (2) having a removable hub (6) for receiving at least one rotating tool, such as a milling tool, a saw, a drill bit and the like, the tool holder (2) having a preferably cylindrically formed carrier body (4) for receiving the removable hub (6), which is formed from a hub flange (8) for receiving tools and a hub ring (10) protruding centrally from the hub flange, it being possible to arrange the preferably centrally formed hub ring (10) on the carrier body (4) and to arrange said ring to be releasable and lockable by means of a locking device,
**characterised in that**
the at least one locking device has, in the tool holder (2), an unlatching bolt (16) received in a pressurisable chamber (18), and a blocking bolt (20) aligned with the unlatching bolt (16) is received in the hub ring (10) and can preferably be biased at its end remote from the tool holder by a spring element (24) and has, on its front end facing the tool holder (2), a latching bolt (34), which in a latching position engages in a latching formation (38) on the carrier body (4) and cooperates with a cam (32) on the front end of the blocking bolt (20), said cam being formed in such a way that, when the unlatching piston (16) is deployed in the hub direction under the pressurisation, the piston (16) presses the blocking bolt (20) into the hub ring (10) and the latching bolt (34) is moved out of the latching formation (38) by the cam (32), in such a way that the removable hub (6) is releasable from the tool holder (2).

2. Machine tool according to claim 1, **characterised in that** a displacement ring (42) is positioned on the hub ring (10) and carries a locking bolt (44), which engages through a guide opening (46), preferably formed by a slot, in the hub ring (10) and is connected undisplaceably to the blocking bolt (20), in such a way that, as a result of the displacement of the displacement ring (42) towards the hub flange (8), the blocking bolt (20) is pressed into the hub ring (10) under the bias of the spring element (24), in such a way that the latching bolt (34) positioned on the cam (32) is moved into its unlatching position.

3. Machine tool according to either claim 1 or claim 2, **characterised in that** the unlatching piston (16) has, on the face thereof remote from the chamber, a spring element (30) which can be biased by the unlatching piston (16), which can be deployed under pressurisation.

4. Machine tool according to any of the preceding claims, **characterised in that** the blocking bolt (20) is received in translation in a hole (22), formed parallel to the hub shaft, in the hub ring (10).

5. Machine tool according to any of the preceding claims, **characterised in that** the latching bolt (34) is received in a preferably radial hole (48) in the hub ring (10) and has, on the end thereof facing the blocking bolt (20), a latching tab (36) which is preferably formed by an oblique face, which faces towards the hub flange and radially from top to bottom.

6. Machine tool according to any of the preceding claims, **characterised in that** the latching formation in the blocking bolt (20) is formed by a recess (38) complementary to the latching tab, in particular being formed with an oblique face, of the same orientation, on the base of the recess (38).

7. Machine tool according to any of the preceding claims, **characterised in that** a plurality of latching devices, arranged at a uniform mutual angular spacing, are provided over the periphery of the carrier body (4) and removable hub (6).

8. Machine tool according to any of the preceding claims, **characterised in that** the carrier body (4) and the hub ring (10) are formed cylindrically about the axial shaft of the machine tool.

9. Machine tool according to any of the preceding claims, **characterised in that** the cam (32) is formed by a preferably web-like flange, which progresses obliquely in cross section and which extends from radially inside to radially outside from the inside of the hub ring (10) to the outside of the hub ring (10).

10. Machine tool according to claim 9, **characterised in that** the latching bolt (34) is provided with a recess via which it is positioned displaceably, preferably in the manner of a slide, on the flange (32).

11. Machine tool according to any of the preceding claims, **characterised in that** the displacement ring (42) is formed coaxial with the shaft of the hub (6).

## Revendications

1. Machine d'usinage sous-marine comportant un porte-outil (2) avec un moyeu interchangeable (6) pour la réception d'au moins un outil rotatif, comme par exemple une fraise, une scie, un foret et analogue, le porte-outil (2) présentant un corps porteur (4) réalisé de préférence de manière cylindrique pour la réception du moyeu interchangeable (6) qui est formé d'un flasque de moyeu (8) pour la réception d'outil et d'une bague de moyeu (10) faisant saillie de manière centrée du flasque de moyeu, la bague de moyeu (10) réalisée de préférence de manière centrée pouvant être disposée sur le corps porteur (4) et pouvant être disposée de manière détachable et blocable par au moins un dispositif de verrouillage,
**caractérisée en ce**
**que** ledit au moins un dispositif de verrouillage présente dans le porte-outil (2) un boulon de déverrouillage (16) reçu dans une chambre (18) pouvant être soumise à une pression et un boulon de blocage (20) aligné avec le boulon de déverrouillage (16) est reçu dans la bague de moyeu (10), lequel peut être précontraint de préférence à son extrémité éloignée du porte-outil par un élément ressort (24) et présente à son extrémité frontale tournée vers le porte-outil (2) un boulon de verrouillage (34) qui, en position de verrouillage, s'engage dans une formation de verrouillage (38) sur le corps porteur (4) et coopère avec une came (32) réalisée à l'extrémité frontale du boulon de blocage (20) de telle sorte que, lors de la sortie du piston de déverrouillage (16) dans la direction du moyeu sous l'effet de la pression, le piston (16) pousse le boulon de blocage (20) dans la bague de moyeu (10) et le boulon de verrouillage (34) est désengagé de la formation de verrouillage (38) par la came (32), de sorte que le moyeu interchangeable (6) peut être détaché du porte-outil (2).

2. Machine d'usinage selon la revendication 1, **caractérisée en ce que** sur la bague de moyeu (10) repose une bague coulissante (42) qui porte un boulon d'arrêt (44) qui traverse une ouverture de guidage (46) formée de préférence par un trou oblong dans la bague de moyeu (10) et qui est relié au boulon de blocage (20) de manière rigide en coulissement, de telle sorte que, par coulissement de la bague coulissante (42) en direction du flasque de moyeu (8), le boulon de blocage (20) est poussé dans la bague de moyeu (10) sous la précontrainte de l'élément ressort (24), de sorte que le boulon de verrouillage (34) reposant sur la came (32) est déplacé dans sa position de déverrouillage.

3. Machine d'usinage selon la revendication 1 ou 2, **caractérisée en ce que** le piston de déverrouillage (16) présente sur son côté éloigné de la chambre un élément ressort (30) qui peut être précontraint par le piston de déverrouillage (16) pouvant être sorti par suite d'une sollicitation en pression.

4. Machine d'usinage selon l'une des revendications précédentes, **caractérisée en ce que** le boulon de blocage (20) est reçu en translation dans un alésage (22) de la bague de moyeu (10), réalisé parallèlement à l'axe du moyeu.

5. Machine d'usinage selon l'une des revendications précédentes, **caractérisée en ce que** le boulon de verrouillage (34) est reçu dans un alésage (48), de préférence radial, de la bague de moyeu (10) et présente, à son extrémité dirigée vers le boulon de blocage (20), un nez de verrouillage (36) qui est formé de préférence par une surface inclinée dirigée vers le flasque de moyeu et du haut radialement vers le bas.

6. Machine d'usinage selon l'une des revendications précédentes, **caractérisée en ce que** la formation de verrouillage dans le boulon de blocage (20) est réalisée par un évidement (38) complémentaire au nez de verrouillage, en particulier avec une surface inclinée de même orientation sur le fond de l'évidement (38).

7. Machine d'usinage selon l'une des revendications précédentes, **caractérisée en ce que** plusieurs moyens de verrouillage disposés avec un écart angulaire régulier les uns par rapport aux autres sont prévus sur la périphérie du corps porteur (4) et du moyeu interchangeable (6).

8. Machine d'usinage selon l'une des revendications précédentes, **caractérisée en ce que** le corps porteur (4) et la bague de moyeu (10) sont réalisés cylindriquement autour de l'axe axial de la machine d'usinage.

9. Machine d'usinage selon l'une des revendications précédentes, **caractérisée en ce que** la came (32) est formée par un flasque s'étendant obliquement en section transversale, de préférence à la manière d'une branche, qui s'étend de l'intérieur de la bague de moyeu (10) vers l'extérieur de la bague de moyeu (10), de l'intérieur radial vers l'extérieur radial.

10. Machine d'usinage selon la revendication 9, **caractérisée en ce que** le boulon de verrouillage (34) est pourvu d'un évidement par lequel il repose sur le flasque (32) de manière à pouvoir coulisser, de préférence à la manière d'un cavalier.

11. Machine d'usinage selon l'une des revendications précédentes, **caractérisée en ce que** la bague coulissante (42) est réalisée coaxialement à l'axe du moyeu (6).
